# EUROPEAN PATENT APPLICATION

(11) **EP 1 148 270 A1**
(43) Date of publication of application: **24.10.2001**
(21) Application number: 00303321.4
(22) Date of filing: 19.04.2000
(51) Int. Cl.: F16H 15/38

(54) **Continuously variable ratio transmission apparatus**

(71) Applicant: TOROTRAK (DEVELOPMENT) LIMITED, Leyland, Lancashire PR5 3UX (GB)
(72) Inventor: Smith, Martin John, Blackburn BB18 BP (GB); De Freitas, Andrew Damian, Wigan WN6 OSB (GB)
(74) Representative: W.P. Thompson & Co.

(57) **Abstract**

A continuously-variable-ratio transmission of the toroidal race rolling traction type, referred to as a "variator" is disclosed. In the variator at least one toroidal cavity (24,26) is defined between a pair of discs (12,14,16,44,81,82,100,102) one of which is mounted for rotation with a shaft (10) and the other of which is free to rotate relative to the shaft. Drive is transmitted from one disc to the other through one or more rollers (20, 22) maintained in contact with the discs. To provide support at least to the shaft or to one of the discs (12,14,16,81,82,100,102) there is provided a bearing (40,42,64,118) which is supported from the casing by one or more limbs (46,48,65,66,108,110) extending through the toroidal cavity.

## Description

The present invention relates to continuously variable ratio transmission apparatus, particularly of the toroidal race rolling traction type, hereinafter referred to as a "variator".

A variator of the twin cavity type typically has a main shaft upon which a pair of outer discs is mounted such as to rotate along with the shaft. Between the outer discs is an inner disc arrangement typically comprising a pair of inner discs, arranged back to back so that respective shaped surfaces of the inner and outer discs define a pair of toroidal cavities. The inner discs are free to rotate relative to the main shaft, typically being journalled thereon. The shaft itself may be mounted by a pair of bearings disposed outboard of the outer discs.

In use drive is transmitted from an engine (eg an internal combustion engine of a motor vehicle) to one of the pairs of discs (inner or outer) and transferred to the other pair of discs by means of rollers disposed in the toroidal cavities, each roller being maintained in contact with the respective shaped surfaces of one of the outer discs and one of the inner discs. The rollers can be tilted to alter the radial positions of their areas of contact with the discs and in this way the transmission ratio of the variator can be continuously varied.

Drive from the engine may be transmitted to the variator by the main shaft. In such an arrangement the drive is transferred via the outer discs (being mounted to rotate along with the shaft) and via the rollers to the inner discs. Drive is taken from the inner discs e.g. by means of a chain, a belt or gearing to a further transmission component, typically an epicyclic gearbox.

Alternatively drive may be transferred from the engine to the inner discs. Again a chain, a belt drive or gearing may be used and in this arrangement is driven from the engine. Drive is transferred through the rollers to the outer discs and so to the main shaft on which the outer discs are mounted, the shaft in turn being coupled to the further transmission component.

In either arrangement the chain, belt or other means by which drive is transferred to or from the inner discs exerts a transverse load on the discs and so on the main shaft upon which the inner discs are journalled. This transverse load causes the shaft to flex. The degree of flexing is relatively small but has the potential of causing a significant effect on the positions of the two output discs, which can cause the load on some of the rollers to be increased (i.e. a crushing effect will be applied) whilst the load on some of the remaining rollers will be decreased, thereby not allowing the drive to be transferred efficiently from the input to the output discs.

While the discussion above concerns variators of the twin cavity type, it is also known to construct variators using only two discs between which is defined a single cavity, one of the discs being driven from the engine and drive being taken from the other.

It will be appreciated that in twin and single cavity variators, the effect of shaft flexing is to cause a distortion of the toroidal cavity or cavities.

Another important design issue concerns the axial length of the variator. There are important incentives to minimise this length in order that the variator does not take up excessive space eg. in a motor vehicle's engine bay.

A known way to remove the transverse load from the shaft and so avoid shaft flexing is to arrange that the inner discs and the means by which they engage the chain or belt drive are journalled independently of the main shaft. This is achieved in a known construction by separating the two inner discs from each other along the axial direction and providing between the inner discs a centre bearing upon which the inner discs are journalled, the centre bearing having a support structure disposed between the inner discs through which it is connected to, and so mounted on, the variator housing.

This arrangement, requiring as it does that the inner discs be separated along the axial direction, increases the axial length of the variator undesirably.

The inventors have recognised that a bearing can be supported by means of one or more limbs extending through the toroidal cavities themselves, notwithstanding the presence of the rollers in the toroidal cavities, and that in this way it is possible to achieve a reduction in the variator's overall length, a reduction in flexing of the shaft, or in some cases both of these advantages.

In accordance with the present invention there is a continuously-variable-ratio transmission device comprising a housing, a rotatably mounted shaft, a first disc mounted on the shaft for rotation therewith, a second disc mounted such as to be rotatable relative to the shaft, the first and second discs together defining a toroidal cavity, at least one roller disposed within the cavity and contacting both of the discs in order to transmit drive from one of the discs to the other, and a bearing arranged to provide support to at least one of the shaft and the second disc, the bearing being supported from the housing by means of at least one limb extending through the toroidal cavity.

It is to be understood that the toroidal cavity (or cavities) of the present invention may be of the full toroidal type or may be of the half toroidal type.

The arrangement makes possible a particularly efficient use of space within the variator, by utilising space within the cavities which normally is not exploited.

While the present invention is applicable to transmission devices having a single toroidal cavity, it is particularly beneficial in twin cavity transmissions whose relatively lengthy shafts can be prone to undesirable flexing.

In a particularly preferred embodiment of the present invention, the first disc is one of a pair of outer discs mounted on the shaft for rotation therewith and an inner disc arrangement comprising the second disc is disposed between the outer discs to define a pair of toroidal cavities both having at least one roller to transmit drive, the bearing being disposed between the outer discs.

A further preferred embodiment of the present invention has a respective bearing in both toroidal cavities, both bearings supporting the shaft and both bearings being supported from the housing by means of respective limbs extending through the respective toroidal cavities. In such an embodiment, the inner disc arrangement may be mounted upon the shaft, in which case support can be provided closer to the disc arrangement, through which transverse loading acts on the shaft, and the bending moment on the shaft can thus be reduced. Alternatively such an embodiment may have an inner disc arrangement which comprises a back to back pair of inner discs and is rotatably mounted independently of the shaft through a centre support extending between the inner discs and coupled to the housing. As compared with known centre support/bearing variators, the present invention provides in this case the advantage that outboard bearings can be dispensed with allowing a reduction in overall length.

In another embodiment of the present invention the inner disc arrangement is rotatably mounted on the bearing, independently of the shaft. This allows transverse loading to be removed from the shaft without the increase in axial length resulting from the known centre support/bearing arrangement described above.

In known variators efficient running of the rollers upon the discs is provided for by maintaining a thin layer of fluid, referred to as "traction fluid", between the two components. This is achieved by means of a system of ducting, extending into the toroidal cavities, through which the traction fluid is constantly ejected onto the disc surfaces to maintain a fluid layer thereupon. While effective, the ducting adds to the constructional complexity of the variator.

In a particularly preferred embodiment of the present invention the limb comprises a passage for fluid which is connectable to a fluid source and which leads to at least one opening through which fluid can be ejected toward at least one of the discs.

Hence the limb can serve a dual purpose and allow the variator construction to be simplified.

An important factor as concerns the operation and efficiency of the variator is the pressure between the rollers and the discs and it is known to provide for control of this pressure by allowing at least one of the discs limited freedom to move axially along the shaft (eg by use of splined mounting of the disc on the shaft) and providing a hydraulic arrangement to bias this disc toward the facing disc so the roller is squeezed therebetween. In twin cavity variators the hydraulic biasing arrangement may act on one of the outer discs. Alternatively, where the inner disc arrangement is of the type having a back to back pair of discs, the hydraulic arrangement may serve to bias one inner disc away from the other. Such a hydraulic arrangement is disposed between the two discs and hydraulic fluid must be supplied thereto, typically by means of a conduit extending between the two discs. In view of the need for the variator as a whole to be compact , it is desirable to make the arrangement as compact as possible.

In accordance with an especially preferred embodiment of the present invention, the limb has a passage for fluid which is connectable to a hydraulic fluid source and which leads to a hydraulic arrangement for axially biasing at least one of the discs in order to control pressure of the discs on the rollers.

In this way use can again be made of otherwise redundant space within the toroidal cavity, resulting in a potential reduction in overall variator dimensions and/or a simplification of the variator construction.

Preferably the inner disc arrangement comprises a back to back pair of inner discs and the hydraulic arrangement is for biasing one of the discs away from the other. In such an embodiment the limb's passage provides an especially straightforward route for supplying hydraulic fluid to the hydraulic arrangement.

Typically the hydraulic arrangement acting on the inner discs rotates along with the discs and a difficulty thus arises in supplying hydraulic fluid to the hydraulic arrangement. This is overcome in a preferred embodiment of the present invention by mounting the inner discs on a rotor hub which receives and is rotatably mounted through the bearing upon a fixed hub which is supported from the housing by means of the limb, the passage of the limb being connected to the hydraulic arrangement via a cavity defined between the rotor hub and the fixed hub and via a connector passage of the rotor hub communicating with the cavity.

Pressure in the hydraulic arrangement varies with rotational speed, due to centrifugal forces on the hydraulic fluid. To compensate for this pressure variation, in a particularly preferred embodiment of the present invention the hydraulic arrangement comprises means defining a pressure chamber and means defining a compensation chamber arranged such that a biasing force due to the pressure in the pressure chamber is opposed, in operation, by a compensation force due to pressure in the compensation chamber, the pressure chamber being connected to the hydraulic fluid source through the passage in the limb.

Specific embodiments of the present invention will now be described, by way of example only, with reference to the accompanying drawings in which:
Figure 1 is a schematic section in an axial plane through a variator;
Figure 2 is a schematic section in an axial plane through a variator embodying the present invention;
Figure 3 is a perspective illustration of selected parts of the variator illustrated in Figure 2;
Figure 4 is a schematic section in a radial plane through the variator illustrated in Figure 2;
Figure 5 is a section in an axial plane through a further variator embodying the present invention;
Figure 6 is a section in an axial plane through a further variator embodying the present invention;
Figure 7 is an axial section through part of yet a further variator embodying the present invention. Several of the illustrated components are circular and only half of each these components- lying to one side of the axis - is shown; and
Figure 8 is an axial section through part of still a further variator embodying the present invention, again half only of the major circular components being shown.

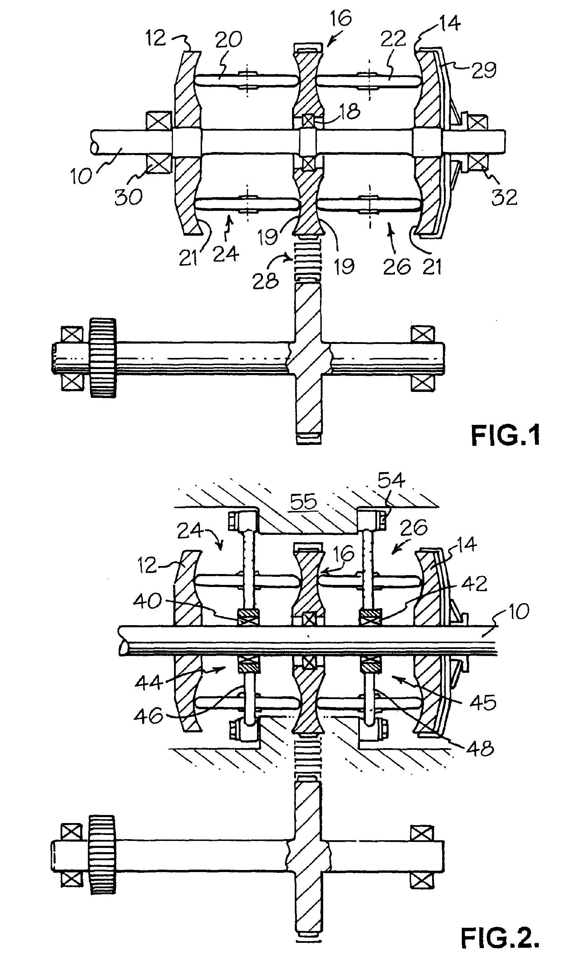

Referring to Figure 1, a variator of known general type comprises a main shaft 10 on which are mounted two outer discs 12, 14. Means such as splined mountings ensure that the outer discs 12, 14 rotate along with the main shaft but allow limited axial movement of outer disc 14 along the main shaft 10.

Between the outer discs 12, 14 is disposed an inner disc arrangement 16 which is journalled on the main shaft 10 by means of a bearing 18 and so is free to rotate relative to the main shaft. Two toroidal cavities 24, 26 are formed between the inner disc arrangement 16 and the outer discs by 12, 14 by facing, part-toroidal surfaces 19, 21 of the discs and contain respective sets of rollers 20, 22 through which drive is transferred from the outer discs to the inner discs, or vice-versa. Typically each toroidal cavity 24, 26 contains three such rollers circumferentially spaced around the cavity.

The inner disc arrangement 16 seen in Fig. 1 comprises a single disc both of whose end faces define part toroidal surfaces 19. An alternative construction has an inner disc arrangement comprising a back to back pair of discs each having one part toroidal surface.

An end load is applied to urge the outer disc 14 toward the other outer disc 12. This end load may be achieved by means of hydraulic pressure applied to cavity 29. The outer disc 12 is prevented from moving away from the outer disc 14, so that the effect of the end load is to force the rollers 20, 22 into contact with the part toroidal surfaces of the discs thereby allowing drive to be transmitted between the discs through the rollers.

Drive is transferred to, or taken from, the inner disc arrangement 16 by means such as a chain drive (as seen at 28 in Figure 1) or alternatively by a belt drive or by gearing.

It will be appreciated that the chain drive 28 (or other drive transfer means associated with the inner disc arrangement 16) exerts a transverse load on the inner disc arrangement 16 and hence, through the bearing 18, on the main shaft 10. The shaft 10 is journalled by bearings 30, 32 disposed outboard of the outer discs 12, 14 so that the transverse load on the inner disc arrangement 16 produces a bending moment on the main shaft which is related to the distances from the bearings 30, 32 to the bearing 18.

As explained above the effect of the bending moment is to cause the main shaft 10 to flex and consequently to distort the shapes of the toroidal cavities in a manner which impairs the operation of the rollers and so of the variator as a whole.

Several of the main parts of the variator illustrated in Figure 1 are common to the embodiment of the invention illustrated in Figures 2 to 4 and the same reference numerals are used for these parts.

The variator illustrated in Figures 2 to 4 differs from that shown in Figure 1 in that it does not have outboard bearings 30, 32. Instead the main shaft 10 is journalled on a pair of bearings 40, 42 both disposed within a respective toroidal cavity 24, 26 and both supported by means of a respective support structure 44, 45 comprising limbs 46, 48 extending radially through the respective toroidal cavity.

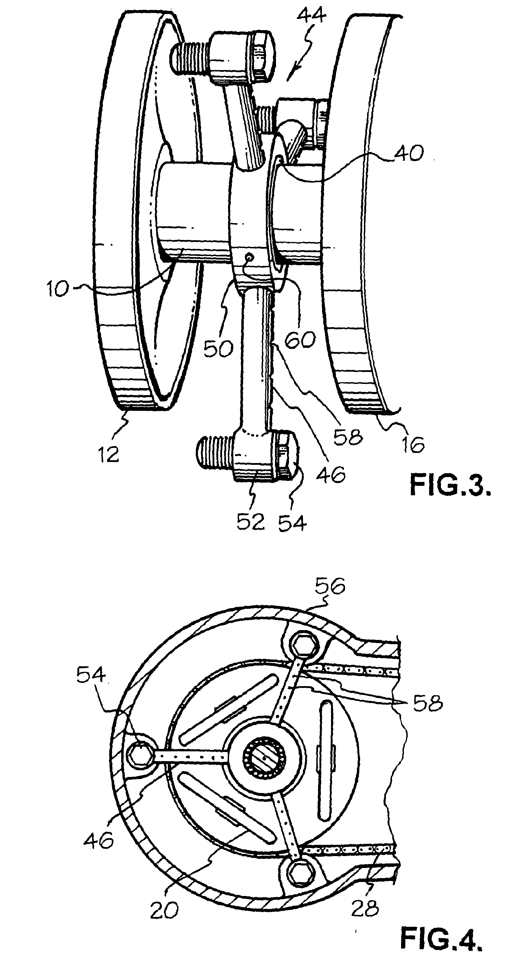

The construction and arrangement of the support structures is best appreciated with reference to Figure 3, which shows one outer disc 12, one inner disc 16, the main shaft 10 extending through the discs and the support structure 44 itself. The other support structure 45 is similarly formed. The rollers and associated carriages are omitted from this drawing for the sake of clarity.

The support structure 44 comprises three radial limbs 46 whose inner ends meet an annular hub 50 surrounding the main shaft 10. The hub 50 contains the bearing 40 by which the shaft is journalled. Enlarged outer ends 52 of the limbs 46 lie radially outward of the discs 12, 16 and receive bolts 54 by which the support structure is secured to the variator housing (not seen in Fig. 3 but labelled 56 in Figures 2 and 4).

Referring now to Figure 4 it can be seen that the three rollers 20 are disposed between the limbs 46.

It will be appreciated that the support structure 44 must not impair the movement of the rollers 20 and their associated carriages. An envelope within the toroidal cavity is mapped out by the rollers and their carriages as they move through the full extent of their travel, and the support structure must not impinge within this envelope if the rollers are to perform their function properly. Hence while the limbs 46 of the illustrated support structure are straight it may in other variators be necessary for the limbs to have a different shape in order to avoid fouling the rollers or carriages.

The illustrated limbs 46 are spaced equally (i.e. at 120 degree intervals) around the circumference of the toroidal cavity. Other arrangements may however be chosen to best withstand the lateral forces exerted on the shaft, again within the constraints imposed by the requirement not to impede the rollers and carriages.

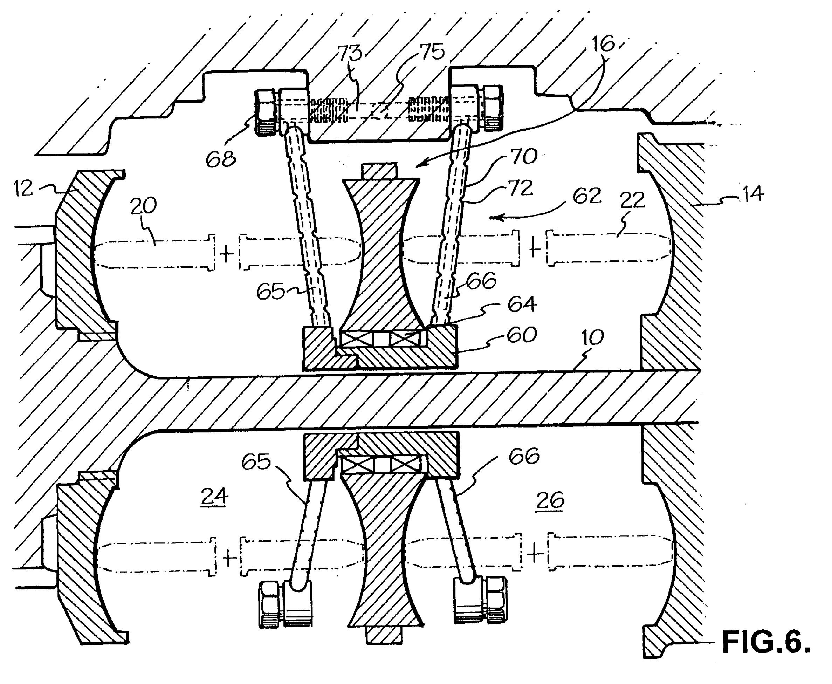

It can be seen in Figures 3 and 4 that the limbs 46 each have a series of generally axially directed nozzle openings 58. In use, traction fluid is ejected out of these openings and onto the part toroidal surfaces 19, 21 of the inner and outer discs 12, 14, 16. Traction fluid is supplied to the openings through passages formed within the support structure. An example of such an arrangement will be described in more detail with reference to Figure 6 below.

Comparing the variator illustrated in Figures 2 to 4 with the known variator illustrated in Figure 1, it will be readily appreciated that the former, not having outboard bearings, (seen at 30, 32 in Figure 1) can be of reduced axial length. It will also be apparent that since the bearings 40, 42 of the former are nearer to the bearing 18 through which transverse loading is applied to the shaft, the shaft bending moment and consequent shaft flexing are also reduced.

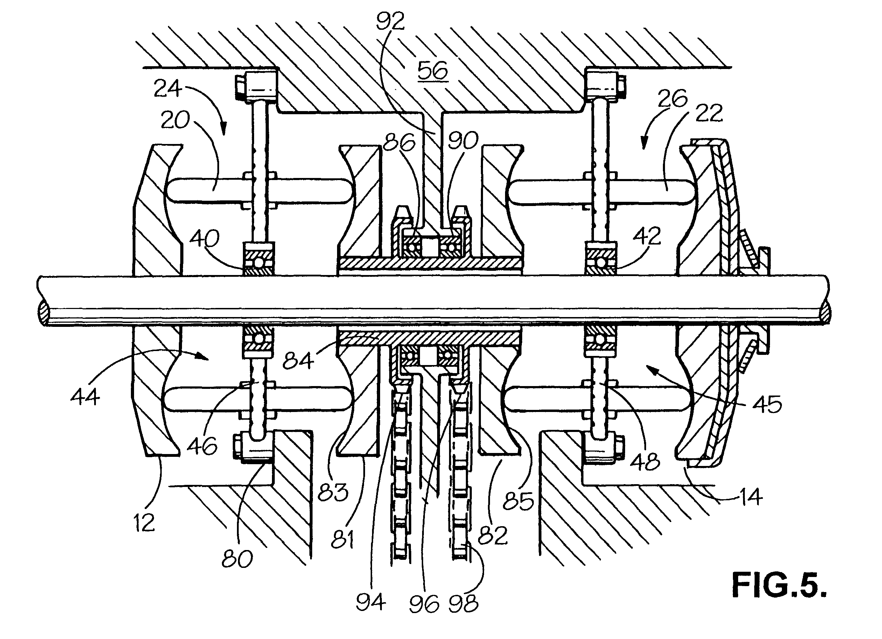

The variator illustrated in Figures 2-4 is of the type which does not have a centre support for supporting the inner disc arrangement from the casing. However the present invention is also applicable to variators having a centre support. Figure 5 schematically illustrates a centre bearing type variator embodying the present invention. Several of the main components of the Figure 5 variator are common to the variator illustrated in Figures 2 to 4 and for these parts the same reference numerals are used. As before the variator comprises outer discs 12, 14 which rotate along with the main shaft 10. Within the toroidal cavities 24, 26 are the support structures 44, 45, formed as in the Figures 2 to 4 variator with limbs 46, 48 which extend through the respective cavities and are coupled at their outer ends to the variator housing 56. The support structures 44, 45 house respective bearings 40, 42 as before, these bearings being disposed within the toroidal cavities 24, 26 and serving to support the shaft 10. Rollers 20, 22 are provided in the toroidal cavities 24, 26 and serve to transmit drive between the outer discs 12, 14 and an inner disc arrangement, generally indicated in Figure 5 by numeral 80.

The inner disc arrangement 80 of the Figure 5 variator utilises a centre bearing and differs from the inner disc arrangement illustrated in Figures 2 to 4. It comprises a back to back pair of inner discs 81, 82 separated along the variator axis and having respective part-toroidal surfaces 83, 85 facing toward the respective outer discs 12, 14 to define the toroidal cavities 24, 26. The inner discs 81, 82 are mounted on a rotor hub 84. Means such as splined mountings (not seen in Figure 5, which is somewhat simplified for the sake of clarity) ensure that the rotor hub 84 and the inner discs 81, 82 cannot rotate relative to each other. The rotor hub 84 has an axial bore through which the shaft 10 passes. The assembly of the rotor hub 84 and inner discs 81, 82 is journalled, coaxially with the shaft 10, by means of bearings 86, 88 mounted in a fixed hub 90 of a centre support 92 which is coupled, at its radially outer extremity, to the variator housing 56 to provide a rigid mounting for the bearings 86, 88.

In this way the inner discs 81, 82 are journalled independently of the shaft 10.

Transfer of drive to/from the rotor hub 84 (and hence the inner discs 81, 82) is through gears 94, 96 provided on the rotor hub and coupled thereto (or integrally formed therewith as in the drawing) such as to prevent relative rotation. The gears are disposed on opposite sides of the fixed hub 90 and drive respective chains 98 (as before a belt or gear drive could instead be used). The gears 94, 96 are arranged such that one is ahead of the other rotationally by a fraction of the angular spacing of the gear teeth, so that noise from the two gear/chain arrangements is out of phase and total noise from the variator is reduced.

As compared with existing centre bearing variators, the provision in the Figure 5 variator of support structures 44, 45 allows outboard bearings (of the type seen at 30 and 32 in Figure 1) to be dispensed with in order to reduce variator length while still allowing transverse loading to be removed from the shaft 10.

Figure. 6 illustrates a further variator construction in which transverse loading from the chain (or belt, or gearing) does not act on the main shaft 10 but is in this construction borne by a support structure 62. Again some of the major parts of the variator - the shaft 10, outer discs 12, 14, rollers 20, 22 and the toroidal cavities 24, 26, correspond to parts illustrated in Figures 2 to 4 and bear the same reference numerals. However in the Figure 6 variator the inner disc arrangement 16 (which is formed as a single part) is journalled independently of the shaft 10 on a fixed hub 60 of the support structure 62 by means of bearings 64. The main shaft 10 passes through the hub 60 but does not make contact therewith. Instead the shaft 10 may for example be journalled on outboard bearings (not seen in Figure 6) as in the Figure 1 arrangement.

In the Figure 6 variator, the hub 60 is supported by two sets of radially extending limbs 65, 66 disposed in the respective toroidal cavities 24, 26. The limbs are secured to the variator housing by means of bolts 68 and so provide a rigid mounting for the bearings 64, preventing the inner disc arrangement 16 from being moved laterally despite the transverse load applied thereto.

Shown in phantom in Figure 6 are passages 70 formed within the limbs 65, 66 through which traction fluid may be supplied to the nozzle openings, labelled 72 in Figure 6. It can be seen that the passages 70 communicate with bores 73 in which the bolts 68 are received, these bolts being formed as Banjo bolts, having internal passages through which traction fluid is supplied. A duct whose end is seen in phantom at 75 in Figure 6 leads to a pumped supply of the traction fluid.

The arrangement illustrated in Figure 6 is considered most suitable where drive from the engine is input via the inner disc arrangement 16 and its associated chain drive since in this type of variator the maximum rotational speed of the bearings 64 is reduced as compared with variators in which drive is input via the outer discs and output via the inner discs.

While the variator illustrated in Figure 6 has an inner disc arrangement formed by a single disc with two shaped faces, the same general arrangement of support structures can be adapted to use twin back to back discs, and to have a hydraulic end load arrangement for biasing the discs away from each other in order to control pressure of the discs upon the rollers.

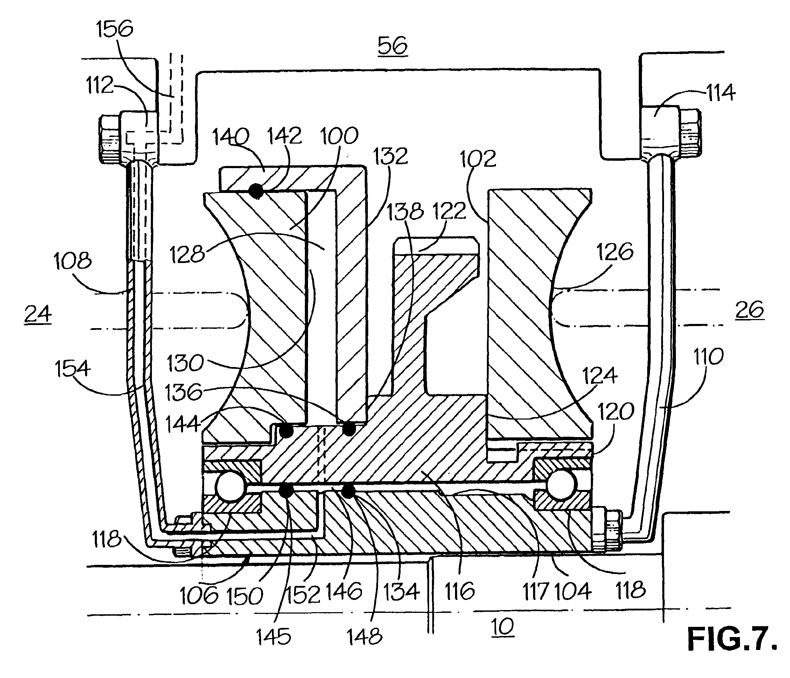

Part of such an arrangement is illustrated in Figure 7 in which inner discs of the variator are seen at 100 and 102, the variator shaft is seen at 10 and the variator housing is seen at 56. The outer discs of this variator are omitted from the drawing for the sake of simplicity but it is to be understood that these parts are again present and define the toroidal cavities 24, 26. Rollers are also present, being shown in phantom at 20 and 22.

A fixed hub 104 has a bore 106 through which the shaft 10 passes. Support structures are provided to rigidly mount the fixed hub 104 and as in previously described embodiments the support structures comprise limbs extending through the toroidal cavities. In Figure 7 two of the limbs, labelled 108, 110 and extending through respective toroidal cavities 24, 26 are seen. The radially outer ends of the limbs are coupled to the variator housing. In the illustrated variator this coupling is by means of bolts 112, 114. While only two limbs are seen in the Figure, it is to be understood that each support structure comprises an angularly spaced set of limbs - eg. three limbs as in Figure 3.

The inner discs 100 and 102 are carried on a rotor hub 116 which has a bore 117 receiving the fixed hub 104. The rotor hub 116 is journalled on the fixed hub 104 by two bearings 118 so that the rotor hub can rotate, along with the inner discs 100, 102 about the fixed hub 104. Rotation of the inner discs relative to the rotor hub 116 is prevented eg. by means of splined mountings as seen at 120. Drive is transmitted to/from the rotor hub 116 (and hence to/from the inner discs 100, 102) by means of a gear 122 which in the illustrated embodiment is integrally formed with the rotor hub 116. The gear 122 engages with a chain or a further gear of the transmission. A pulley for engagement with a drive belt could alternatively be provided in place of the gear 122.

Inner disc 102 abuts at 124 against a shoulder of the rotor hub 116. In operation pressure applied to the part toroidal surface 126 of this disc by the roller 22 maintains the disc 102 in abutment with the shoulder so that the disc cannot move axially.

However inner disc 100 has the facility to move in the axial direction under the influence of hydraulic pressure in a chamber 128 in order to provide the end loading required to force the rollers into contact with the discs.

The chamber 128 is defined between a rear face 130 of the inner disc 100 and an annular collar 132 which is disposed around the rotor hub 116 and rotates therewith. The collar 132 has a central opening bordered by a radially innermost face 134 lying adjacent the rotor hub's radially outer surface. A seal, schematically indicated at 136, prevents escape of hydraulic fluid in this region. It will be apparent that pressure in the chamber 128 urges the collar 132 away from the inner disc 100 (toward the right in Figure 7) and motion of the collar in this direction is prevented by abutment at 138 with a shoulder of the rotor hub 116.

The collar has, at its radially outer periphery, an integrally formed annular wall 140 projecting in the axial direction to form what is in effect a hydraulic cylinder receiving the inner disc 100 in the manner of a piston.

A seal 142 prevents fluid from escaping between the radially outer surface of the disc 100 and the radially inner surface of the wall 140 while allowing relative axial motion of these surfaces. A further seal 143 prevents escape of fluid between the inner disc 100 and the rotor hub 116 and again permits relative axial motion.

It will be apparent that the effect of hydraulic pressure in the chamber 128 is to urge the inner disc 100 toward its associated rollers in the toroidal cavity 24 (ie. to the left in Figure 7) and so to provide the end loading required to maintain contact pressure of the discs with the rollers in this cavity. Further, the bearings 118 allow the rotor hub 116 limited freedom to move in the axial direction and the effect of the end loading is also to urge the rotor hub 116 to move toward the right in Figure 7, along with the inner disc 102 which is thus urged toward its associated rollers thereby maintaining contact pressure between rollers and discs in toroidal cavity 26.

A path for supply of hydraulic fluid to the chamber 128 is formed via a first passage 144 in the rotor hub 116 communicating at its radially inner end with the chamber 128 and at its radially outer end with an annular cavity 145 formed between the rotor hub 116 and the fixed hub 104. The cavity 145 is enclosed by seals 146, 147 (disposed between the rotor and fixed hubs 116, 102) and communicates with a second passage 148 formed in the fixed hub 104. In this way hydraulic fluid is passed between the fixed and rotor hubs 104, 116 despite rotation of the latter relative to the former.

The second passage 148 leads in its turn to a third passage 149 formed through the limb 108 and then, at the limb's radially outer end, to a fourth passage 151 which is formed in the housing 56 and is connected to a source of pressurised hydraulic fluid.

Hence pressurised hydraulic fluid can be supplied to the chamber 128. The pressure of this fluid is typically variable in order to provide an end load which is adjustable to take account of transmission operating conditions and to maintain high variator efficiency.

A problem arises in operation of the variator illustrated in Figure 7 because pressure in the chamber 128 is dependent to some degree on the speed of rotation of the inner disc assembly. Hydraulic fluid is urged centrifugally toward the radially outer part of the chamber, the magnitude of the centrifugal force (and hence the additional pressure created in the chamber) being dependent upon the rotational speed. It is desirable in some manner to compensate for this additional pressure in order to allow the desired end loading to be provided at any rotational speed.

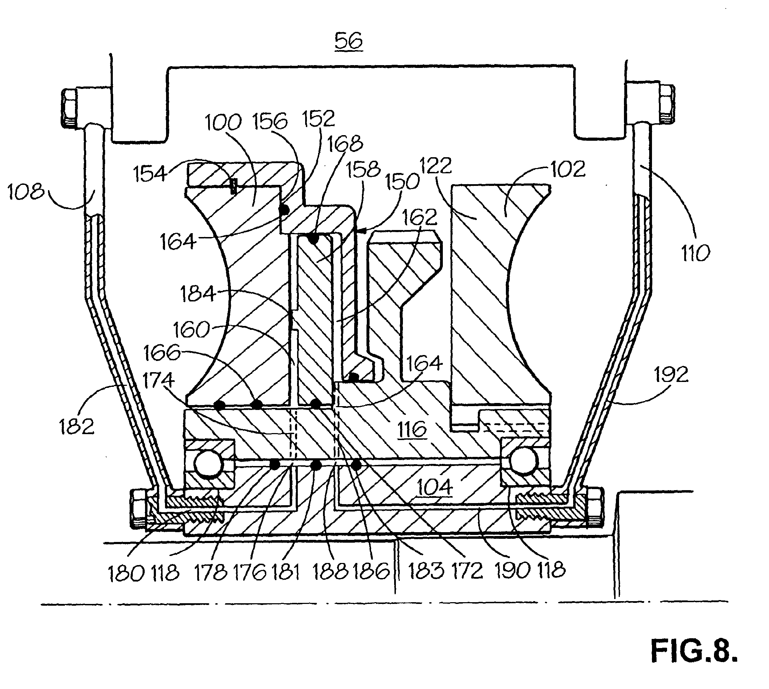

The variator illustrated in Figure 8 is constructed to achieve such compensation and is in many respects similar to the Figure 7 variator, having inner discs 100, 102 mounted on a rotor hub 116 which bears a gear 122 for transmitting drive and is journalled on bearings 118 and thereby rotatably mounted upon a fixed hub 104. The fixed hub is supported from the casing 56 by limbs including those seen at 108 and 110. The limbs extend through the toroidal cavities.

The Figure 8 variator differs from that shown in Figure 7 with regard to the hydraulic arrangement by which the end load is applied.

In Figure 8, a collar 150 is disposed around and capable of limited axial motion relative to the rotor hub 116. The collar 150 is annular and has a stepped circumferential perimeter wall 152 whose wide mouth portion receives the inner disc 100. Relative axial motion of the collar 150 and the inner disc 100 is prevented by an interlocking arrangement 154 and by abutment of the disc's rear face against a shoulder of the collar at 156, so that the collar and disc move as a unit.

Within the collar 150 and behind the inner disc 100 is an annular partition 158 extending radially between the collar's radially inner surface and the rotor hub's radially outer surface. The partition 158 divides the internal space within the collar 150 to form a high pressure chamber 160 adjacent the inner disc 100 and, on the opposite side of the partition, a compensation chamber 162. In use, pressure in the high pressure chamber 160 is higher than in the compensation chamber 162 and as a result the partition 158 is maintained in a position in which it abuts at 164 against a shoulder of the rotor hub 116. The axial position of the partition relative to the rotor hub 116 is thereby fixed in use.

Escape of hydraulic fluid from the high pressure and compensation chambers is prevented by means of:
i. a seal 165 between the rear face of the inner disc 100 and the shoulder which it abuts of the collar 150;
ii. a seal 166 (which in the illustrated embodiment is one of a pair) between the inner disc 100 and the rotor hub 116 upon which it is slidably mounted;
iii. a seal 168 between the radially outer surface of the partition 158 and the radially inner surface of the collar 150;
iv. a seal 170 between the radially inner surface of the partition and the radially outer surface of the rotor hub 116; and
v. a seal 172 between the radially inner surface of the collar 150 and the radially outer surface of the rotor hub 116.

Supply of hydraulic fluid to the high pressure chamber 160 is provided through a radial passage 174 in the rotor hub 116, leading to an annular cavity 176 between the rotor hub 116 and the fixed hub 104, the cavity being enclosed by a pair of seals 178, 181 between these two parts. Further passages 180, 182 lead respectively through the fixed hub 104 and the limb 108 to a source of hydraulic fluid (not illustrated) at a controlled pressure. A projection 184 formed on the partition and facing toward the inner disc 100 ensures that the inner disc 100 cannot move far enough to close off the opening of the radial passage 174.

Hydraulic fluid is also supplied at a low pressure to the compensation chamber through a radial passage 186 leading via an annular cavity 188 (defined between the rotor and fixed hubs 116, 104 by seals 181, 183) and via passages 190, 192 in the fixed hub 104 and the limb 110 to a low pressure fluid source.

In operation, the effect of the high pressure fluid supplied to the high pressure chamber 160 is to urge the inner disc 100 away from the partition 158 - ie. toward the left in Figure 8. In this way the required end load is generated and, as in the Figure 7 variator, the facility for limited axial movement of the rotor hub 116 ensures that this load is applied to both sets of discs/rollers.

Since the partition is effectively fixed and the inner disc 100/collar 150 can only move as a unit, the effect of pressure in the compensation chamber 162 is to urge the disc 100/collar 150 in the direction toward the right in Figure 8 - ie. to oppose the force applied due to pressure in the high pressure chamber 160. Pressure in the compensation chamber 162 is lower than pressure in the high pressure chamber 160, so that the resultant force on the inner disc 100/collar 150 is still toward the left, as it must be to provide the end load.

However, it will be appreciated that pressure variations in the two chambers due to changes in rotational speed on the inner disc assembly are equal and produce corresponding equal changes in the magnitudes of the respective forces applied to the disc 100/collar 150. Since the forces applied by pressure of fluid in the two chambers act in opposite directions, such changes cancel each other out and the resultant force applied to the disc 100 does not change with rotational speed.

## Claims

1. A continuously-variable-ratio transmission device comprising a housing (56), a rotatably mounted shaft (10), a first disc (12,14) mounted on the shaft for rotation therewith, a second disc (16,81,82,100,102) mounted such as to be rotatable relative to the shaft, the first and second discs together defining a toroidal cavity (24,26), and at least one roller (20,22) disposed within the cavity and contacting both of the discs in order to transmit drive from one of the discs to the other, **characterised in that** a bearing (40,42,64,118) is arranged to provide support to at least one of the shaft and the second disc, the bearing being supported from the housing by means of at least one limb (46,48,65,66,108,110) extending through the toroidal cavity.

2. A continuously-variable-ratio transmission device as claimed in claim 1 wherein the first disc is one of a pair of outer discs (12,14) mounted on the shaft for rotation therewith and an inner disc arrangement (16,80,81,82,100,102,116) comprising the second disc is disposed between the outer discs to define a pair of toroidal cavities (24,26) both having at least one roller to transmit drive (20,22), the bearing being disposed between the outer discs.

3. A continuously-variable-ratio transmission device as claimed in claim 2 wherein the inner disc arrangement is rotatably mounted upon the shaft.

4. A continuously-variable-ratio transmission device as claimed in claim 2 or claim 3 comprising a respective bearing (40,42) in both toroidal cavities, both bearings supporting the shaft and both bearings being supported from the housing by means of respective limbs (46,48) extending through the respective toroidal cavities.

5. A continuously-variable-ratio transmission device as claimed in claim 4 wherein the inner disc arrangement comprises a back to back pair of inner discs (100,102) and is rotatably mounted independently of the shaft through a centre support (92) extending between the inner discs and coupled to the housing.

6. A continuously-variable-ratio transmission device as claimed in claim 2 wherein the inner disc arrangement (16,100,102) is rotatably mounted on the bearing (64,118), independently of the shaft.

7. A continuously-variable-ratio transmission device as claimed in claim 6 wherein the bearing (64,118) is supported from the housing by means of respective limbs (65,66,108,110) extending through both toroidal cavities.

8. A continuously-variable-ratio transmission device as claimed in any preceding claim wherein the limb (108) has a passage (149,182) for fluid which is connectable to a hydraulic fluid source and which leads to a hydraulic arrangement (128,130,132,140,150,152,158,160) for axially biasing at least one of the discs in order to control pressure of the discs on the rollers.

9. A continuously-variable-ratio transmission device as claimed in claim 8 wherein the inner disc arrangement comprises a back to back pair of inner discs (100,102) and the hydraulic arrangement is for biasing one of the inner discs away from the other.

10. A continuously-variable-ratio transmission device as claimed in claim 9 wherein the inner discs are mounted on a rotor hub (116) which receives and is rotatably mounted through the bearing (118) upon a fixed hub (104) which is supported from the housing by means of the limb (108,110), the passage (149,182) of the limb being connected to the hydraulic arrangement (128,130,132,140, 150,152,158,160) via a cavity (145,176) defined between the rotor hub and the fixed hub and via a connector passage (144,174) of the rotor hub communicating with the cavity.

11. A continuously-variable-ratio transmission device as claimed in claim 9 or claim 10 wherein the hydraulic arrangement comprises means (150,152,158,160) defining a pressure chamber (160) and means (150,158) defining a compensation chamber (162) arranged such that a biasing force due to the pressure in the pressure chamber is opposed, in operation, by a compensation force due to pressure in the compensation chamber, the pressure chamber being connected to the hydraulic fluid source through the passage (182) in the limb.

12. A continuously-variable-ratio transmission as claimed in claim 11 wherein the compensation chamber is connected to a fluid source through a further passage (192) of a further limb (110) extending through one of the toroidal cavities.

13. A continuously-variable-ratio transmission device as claimed in any preceding claim wherein the limb has a passage (70) for fluid which is connectable to a fluid source and which leads to at least one opening (58,72) through which fluid can be ejected toward at least one of the discs.

14. A continuously-variable-ratio transmission device as claimed in claim 13 wherein an outer end region of the limb has a bore (73) by means of which the limb is coupled to the housing in use, the bore communicating with the passage such that fluid can be input through the bore.

15. A continuously-variable-ratio transmission device as claimed in any preceding claim wherein the limb forms part of a support structure comprising a plurality of circumferentially spaced limbs (46,48,65,108,110) radiating from a hub (50,84,60,104) having the bearing.

16. A motor vehicle transmission comprising a continuously -variable-ratio transmission device as claimed in any preceding claim.
